# EUROPÄISCHE PATENTANMELDUNG

(11) **EP 2 336 262 A1**
(43) Veröffentlichungstag der Anmeldung: **22.06.2011**
(21) Anmeldenummer: 09179931.2
(22) Anmeldetag: 18.12.2009
(51) Int. Cl.: C09J 163/00, B62D 27/02, C09J 5/06, F16J 15/14

(54) **Bördelfalzverklebung**

(71) Anmelder: Sika Technology AG, 6340 Baar (CH)
(72) Erfinder: Gutgsell, Michael, 8610, Uster (CH); Schulenburg, Jan Olaf, 8610, Uster (CH)
(74) Vertreter: Isler, Jörg

(57) **Zusammenfassung**

Die vorliegende Erfindung betrifft die Verwendung einer hitzehärtenden Epoxidzusammensetzung enthaltend
- mindestens ein Epoxidharz **A** mit durchschnittlich mehr als einer Epoxidgruppe pro Molekül;
- mindesten einen Härter **B** für Epoxidharze, welcher durch erhöhte Temperatur aktiviert wird; sowie
- metallische Partikel mit einer durchschnittlichen Teilchengrösse von 50 - 3000 µm

als Klebstoff in Bördelfalzverklebungen.

Die Verwendung zeichnet sich durch einen effizienten Wärmeeintrag in den Klebstoff der Bördelfalzverklebung aus.

## Beschreibung

### Technisches Gebiet

Die Erfindung betrifft das Gebiet der Bördelfalzverklebungen.

### Stand der Technik

Bördelfalzverklebungen werden schon seit langem in der industriellen Fertigung verwendet. Es ist bekannt Transportmittelteile, wie Türen, Kofferraumhauben, Rückwandklappen Motorraumhauben und dergleichen aus einem Aussenblech und einem Innenblech mittels Falzverbindung herzustellen. Um eine Fixierung des Falzes zu gewährleisten wird hierbei ein Klebstoff verwendet, welcher das Innenblech mit dem Aussenblech verbindet. Um diese Transportmittelteile möglichst schnell mechanischen Belastungen aussetzen zu können, müssen Klebstoffe für Bördelfalzverklebungen möglichst kurze Vernetzungszeiten aufweisen. Als Klebstoff finden beispielsweise hitzehärtende Klebstoffe Verwendung, wobei der Wärmeeintrag bei der industriellen Fertigung typischerweise indirekt über das Erhitzen des Transportmittelteils erfolgt. Die Patentanmeldung EP 1935955 (A1) beschreibt einen solchen Klebstoff, welcher aber unter gewissen Umständen eine zu langsame Aushärtung aufweist. Ein schnelles und effizientes Vernetzen der Klebstoffe ist in der industriellen Fertigung aus Zeit- und Kostengründen wünschenswert.

### Darstellung der Erfindung

Aufgabe der vorliegenden Erfindung ist es daher, Klebstoffe für Bördelfalzverklebungen zur Verfügung zu stellen, die sich durch eine kurze Vernetzungszeit auszeichnen.

Überraschenderweise wurde gefunden, dass diese Aufgabe durch die Verwendung gemäss Anspruch 1 gelöst werden kann. Dies wird insbesondere dadurch ermöglicht, dass eine hitzehärtende Epoxidzusammensetzung verwendet wird, die metallische Partikel mit einer durchschnittlichen Teilchengrösse von 50 - 3000 µm aufweist, welche den Wärmeenergieeintrag vom Transportmittelteil in den Klebstoff der Bördelfalzverklebung zu beschleunigen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft in einem ersten Aspekt die Verwendung einer hitzehärtenden Epoxidzusammensetzung enthaltend
- mindestens ein Epoxidharz **A** mit durchschnittlich mehr als einer Epoxidgruppe pro Molekül;
- mindesten einen Härter **B** für Epoxidharze, welcher durch erhöhte Temperatur aktiviert wird; sowie
- metallische Partikel mit einer durchschnittlichen Teilchengrösse von 50-3000 µm
als Klebstoff in Bördelfalzverklebungen.

Die hitzehärtende Epoxidzusammensetzung enthält mindestens ein Epoxidharz **A** mit durchschnittlich mehr als einer Epoxidgruppe pro Molekül. Die Epoxidgruppe liegt vorzugsweise als Glycidylethergruppe vor. Das Epoxidharz **A** mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Fiüssigharzen" verwendet. Die Glastemperatur von Festharzen liegt über Raumtemperatur, d.h. sie lassen sich bei Raumtemperatur zu schüttfähigen Pulvern zerkleinern.

Bevorzugte Epoxid-Festharze weisen die Formel (X) auf

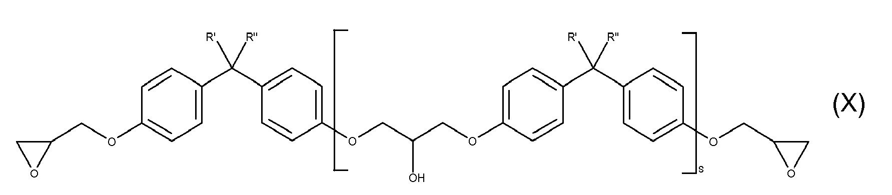

Hierbei stehen die Substituenten R' und R" unabhängig voneinander entweder für H oder CH₃.

Weiterhin steht der Index s für einen Wert von > 1.5, insbesondere von 2 bis 12.

Derartige Epoxid-Festharze sind kommerziell erhältlich beispielsweise von Dow oder Huntsman oder Hexion.

Verbindungen der Formel (X) mit einem Index s zwischen 1 und 1.5 werden vom Fachmann als Semisolid-Epoxidharze bezeichnet. Für die hier vorliegende Erfindung werden sie ebenfalls als Festharze betrachtet. Bevorzugt sind jedoch Epoxidharze im engeren Sinn, d.h. wo der Index s einen Wert von > 1.5 aufweist.

Bevorzugte Epoxid-Flüssigharze weisen die Formel (XI) auf

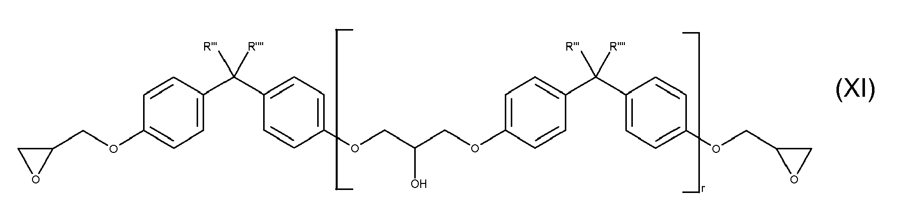

Hierbei stehen die Substituenten R'" und R"" unabhängig voneinander entweder für H oder CH₃. Weiterhin steht der Index r für einen Wert von 0 bis 1. Bevorzugt steht r für einen Wert von kleiner als 0.2.

Es handelt sich somit vorzugsweise um Diglycidylether von Bisphenol-A (DGEBA), von Bisphenol-F sowie von Bisphenol-A/F (Die Bezeichnung ,A/F' verweist hierbei auf eine Mischung von Aceton mit Formaldehyd, welche als Edukt bei dessen Herstellung verwendet wird). Solche Flüssigharze sind beispielsweise als Araldite® GY 250, Araldite® PY 304, Araldite® GY 282 (Huntsman) oder D.E.R.™ 331 oder D.E.R.™330 (Dow) oder Epikote 828 (Hexion) erhältlich.

Bevorzugt stellt das Epoxidharz **A** ein Epoxid-Flüssigharz der Formel (XI) dar. In einer noch mehr bevorzugten Ausführungsform enthält die hitzehärtende Epoxidzusammensetzung sowohl mindestens ein Epoxid-Flüssigharz der Formel (XI) als auch mindestens ein Epoxid-Festharz der Formel (X).

Der Anteil an Epoxidharzes **A** beträgt vorzugsweise 5 - 85 Gew.-%, insbesondere 10 - 70 Gew.-%, bevorzugt 10 - 60 Gew.-%, am Gewicht der hitzehärtenden Epoxidzusammensetzung.

Die hitzehärtende Epoxidzusammensetzung enthält weiterhin mindestens einen Härter **B** für Epoxidharze, welcher durch erhöhte Temperatur aktiviert wird. Es handelt sich hierbei vorzugsweise um einen Härter, welcher ausgewählt ist aus der Gruppe bestehend aus Dicyandiamid, Guanamine, Guanidine, Aminoguanidine und deren Derivate. Weiterhin möglich sind beschleunigend wirksame Härter, wie substituierte Harnstoffe, wie beispielsweise 3-Chlor-4-Methylphenylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron) oder nicht aromatisch-substituierte Harnstoffe.

Vorzugsweise handelt es sich bei den substituierten Harnstoffen um nicht-aromatisch-substituierte Harnstoffe, insbesondere aliphatischsubstituierte Harnstoffe, insbesondere bevorzugt N,N-Dimethylharnstoff (=1,1-Dimethylharnstoff), N,N'-Dimethylharnstoff (=1,3-Dimethylharnstoff), N',N'-Dimethyl-N-Butylharnstoff (=3-Butyl-1,1-Dimethylharnstoff) und N,N,N',N'-Tetramethylharnstoff (=1,1,3,3-Tetramethylharnstoff).

Bevorzugt handelt es sich beim Härter **B** um einen Härter, welcher ausgewählt ist aus der Gruppe bestehend aus Dicyandiamid, Guanamine, Guanidine, Aminoguanidine, substituierte Harnstoffe, Imidazole und Amin-Komplexe, sowie deren Derivate.

Besonders bevorzugt als Härter **B** sind, in Verbindung mit Dicyandiamid, N,N-Dimethylharnstoff (=1,1-Dimethylharnstoff), N,N'-Dimethylharnstoff (=1,3-Dimethylharnstoff), N',N'-Dimethyl-N-Butylharnstoff (=3-Butyl-1,1-Dimethylharnstoff) und N,N,N',N'-Tetramethylharnstoff (=1,1,3,3-Tetramethylharnstoff).

Vorteilhaft beträgt der Gesamtanteil des Härters **B** 0.5 ― 12 Gewichts-%, vorzugsweise 1 ― 8 Gewichts-%, bezogen auf das Gewicht der hitzehärtenden Epoxidzusammensetzung.

Die hitzehärtende Epoxidzusammensetzung enthält weiterhin metallische Partikel mit einer durchschnittlichen Teilchengrösse von 50 - 3000 µm.

Unter dem Begriff "metallische Partikel" werden im vorliegenden Dokument Partikel enthaltend Metall oder Metalllegierungen verstanden.

Vorzugsweise weisen die metallischen Partikel eine durchschnittliche Teilchengrösse von 100 bis 1000 µm, insbesondere von 200 bis 400 µm, auf.

Vorzugsweise weisen die metallischen Partikel eine derartige Verteilung der Teilchengrösse auf, dass mehr als 70, bevorzugt mehr als 80% der metallischen Partikel nicht mehr als 50 %, bevorzugt nicht mehr als 30% von der durchschnittlichen Teilchengrösse abweichen.

Es ist weiter vorteilhaft, wenn die Zusammensetzung der metallischen Partikel eine Härte gemessen nach Härteprüfverfahren Vickers DIN ISO 6507:2005 von kleiner als 120 HV 1, vorzugsweise kleiner als 50 HV 1, insbesondere bevorzugt kleiner als 30 HV 1 aufweisen.

Typische Werte für die Härte HV 1 bei Metallen sind beispielsweise: Aluminium 17 HV 1, Kupfer 37 HV 1, Zinn 6 HV 1, Zink 40 HV 1, Chrom 100 HV 1, Eisen 60 HV 1, Nickel 64 HV 1, und Blei 5 HV 1.

Dies ist insbesondere bei der Verwendung der hitzehärtenden Epoxidzusammensetzung als Klebstoff für Bördelfalzverklebungen vorteilhaft. Da Klebstoffe bei Bördelfalzverklebungen verpresst werden, werden die metallischen Partikel aufgrund einer vorgehend genannten Härte mit der aufgebrachten Presskraft auf die für die Klebschicht vorgesehene Schichtdicke gebracht. Da die metallischen Partikel vorzugsweise einen grösseren Durchmesser aufweisen als die Klebstoffschichtdicke, führt eine erwähnte Härte dazu, dass die metallischen Partikel nach dem Verpressen beidseitig in Kontakt mit dem Aussenblech, respektive dem Innenblech stehen.

Somit ist es von grossem Vorteil, wenn die metallischen Partikel unter dem aufgewendeten Druck verpresst werden, respektive auf die vorgesehene Klebstoffschichtdicke verpresst werden, die metallischen Partikel dem Druck bei der Verpressung also nicht widerstehen und sich plastisch verformen.

Es ist weiter vorteilhaft, wenn ein bedeutender Anteil der Oberfläche der metallischen Partikel im verpressten Zustand mit dem Aussenblech, resp. dem Innenblech, in Kontakt steht. Unter bedeutendem Anteil der Oberfläche sind mehr als 15 %, vorzugsweise 25 - 80%, insbesondere 50 - 75%, der Oberfläche der metallischen Partikel zu verstehen. Der Fachmann ist klar, dass sich zwischen metallischem Partikel im verpressten Zustand und Innenblech und/oder Aussenblech unter Umständen eine sehr dünne Schicht von Klebstoffbindemittel befinden kann.

Die Zusammensetzung der metallischen Partikel weist vorzugsweise eine Wärmeleitfähigkeit von grösser als 10 W/(m.K), vorzugsweise grösser als 50 W/(m·K), insbesondere bevorzugt grösser als 100 W/(m·K) auf.

Da Bördelfalzverklebungen typischerweise durch Induktionserwärmung zumindest teilweise ausgehärtet werden, trägt eine Wärmeleitfähigkeit von grösser als 10 W/(m.K) zu einem effizienten Wärmeenergieeintrag bei. Typische Wärmeleitfähigkeiten bei Metallen sind beispielsweise: Aluminium 200 W/(m.K), Kupfer 380 W/(m.K), Zinn 65 W/(m.K), Zink 110 W/(m.K), Chrom 95 W/(m.K), Eisen 80 W/(m.K), Nickel 85 W/(m.K), und Blei 35 W/(m.K).

Vorzugsweise enthält die Zusammensetzung der metallischen Partikel ein Metall, welches ausgewählt ist aus der Liste bestehend aus Aluminium, Kupfer, Zinn, Zink, Chrom, Eisen, Nickel und Blei. Insbesondere bevorzugt besteht die Zusammensetzung der metallischen Partikel aus einem Metall ausgewählt aus der vorgehend genannten Liste oder besteht aus einer Legierung, die eines der Metalle ausgewählt aus der vorgehend genannten Liste umfasst.

Weiter ist dem Fachmann klar, dass sich die Metallpartikel, im Falle einer Induktionserwärmung, weiter, aufgrund elektrischer respektive mit der Induktion verbundener Effekte, positiv auf das Aushärteverhalten auswirken können.

Die metallischen Partikel können unterschiedlich ausgestaltet sein. Die metallischen Partikel können beispielsweise plattig, bänderartig, stäbchenförmig, quaderförmig, würfelförmig, kegelförmig, kegelstumpfförmig, pyramidal, pyramidenstumpfförmig, kugelig, ellipsoidförmig oder kugelförmig sein. Besonders bevorzugt sind derartige metallische Partikel, welche möglichst gleichförmige Ausdehnungsdicken aufweisen.

Der Gewichtsanteil an metallischen Partikeln ist vorzugsweise derart gewählt, dass der Gewichtsanteil an metallischen Partikeln 1 ― 50 Gew.-%, insbesondere 2 ― 30 Gew.-%, bevorzugt 2 ― 20 Gew.-%, bezogen auf das Gewicht der hitzehärtenden Epoxidzusammensetzung, beträgt.

Die hitzehärtende Epoxidzusammensetzung weist in einer besonders bevorzugten Ausführungsform Abstandhalter auf. Als ein Abstandhalter wird im vorliegenden Dokument ein Körper verstanden, welcher zwei Körper auf räumliche Distanz zueinender hält, wenn der Abstandhalter sich zwischen diesen zwei Körpern befindet.

Der Abstandhalter kann unterschiedlich ausgestaltet sein. Es können sehr unterschiedliche Materialien und Formen von Abstandhalter verwendet werden. Besonders bevorzugt sind derartige Abstandhalter, welche möglichst gleichförmige Ausdehnungsdicken aufweisen. Weiterhin sind bevorzugt derartige Abstandhalter, welche keine Spitzen, die senkrecht zum Innenblech, und/oder Aussenblech stehen, aufweisen, weil durch die kleine Auflagefläche des Aussenblechs und/oder des Innenblechs bei dem grossen Verpressdruck das Blech sich verformen könnte, so dass sich die Lage der Abstandhalter auf dem Aussenblech abzeichnen kann, was optisch vielfach nicht akzeptabel ist. Insbesondere bevorzugt sind Kugeln und Würfel als Abstandhalter.

Die Abstandhalter weisen insbesondere eine kugelige Form, bevorzugt eine Kugelform auf. Meist bevorzugt sind kugelförmige Abstandhalter.

Die Abstandhalter können hohl oder gefüllt sein. Hohle Abstandhalter sind vielfach aus Gewichtsgründen bevorzugt. Die Wanddicke derartiger hohler Abstandhalter ist abhängig von den mechanischen Eigenschaften des Wandmaterials, insbesondere dessen Druckfestigkeit. Beispiele für derartige hohle Abstandhalter sind Glashohlkugeln und Keramikhohlkugeln.

Die Abstandhalter können aus unterschiedlichen Materialien gefertigt sein. Insbesondere ist es für das vorliegende Verfahren von grossem Vorteil, wenn der Abstandhalter druckstabil und möglichst hart ist.

Somit weist die Zusammensetzung der Abstandhalter vorteilhaft eine Härte gemessen nach Härteprüfverfahren Vickers DIN ISO 6507:2005 von grösser als 200 HV 1, bevorzugt grösser als 400 HV 1, insbesondere grösser als 600 HV 1 auf.

Es ist nämlich von Vorteil, wenn der Abstandhalter dem Druck bei der Verpressung widersteht. Der Abstandhalter ist deshalb insbesondere aus Glas, Keramik, Aluminumoxid, Siliziumdioxid, Zirkoniumoxid, Nitrid, insbesondere Bornitrid, oder Carbid, insbesondere Siliziumcarbid.

Der Abstandhalter verfügt vorteilhaft über eine möglichst enge Grössenverteilung, insbesondere über eine monomodale Grössenverteilung, d.h. dass alle Abstandhalter in etwa dieselbe Grösse aufweisen.

Meist bevorzugt ist der Abstandhalter aus Glas oder Keramik.

Der Anteil des Abstandhalters ist vorzugsweise derart gewählt, dass der Volumenanteil des Abstandhalters nicht mehr als 10 Volumen-%, insbesondere zwischen 0.1 und 4 Volumen-%, bevorzugt zwischen 0.5 und 3 Volumen-%, beträgt, bezogen auf das Gesamtvolumen der hitzehärtenden Epoxidzusammensetzung.

Die Abstandhalter weisen vorteilhaft eine Partikelgrösse von weniger als 1 mm auf.

Es ist besonders vorteilhaft, wenn die metallischen Partikel eine durchschnittliche Teilchengrösse aufweisen, welche 110 - 500 %, vorzugsweise 150 - 400 %, der durchschnittlichen Teilchengrösse der Abstandhalter beträgt.

Vorzugsweise enthält die hitzehärtende Epoxidharzzusammensetzung weiterhin mindestens einen Zähigkeitsverbesserer **D**.

Unter einem "Zähigkeitsverbesserer" wird in diesem Dokument ein Zusatz zu einer Epoxidharzmatrix verstanden, der bereits bei geringen Zuschlägen von 0.1 ― 50 Gew.-%, insbesondere von 0.5 ― 40 Gew.-%, eine deutliche Zunahme der Zähigkeit bewirkt und somit in der Lage ist, höhere Biege-, Zug-, Schlag- oder Stossbeanspruchung aufzunehmen, bevor die Matrix einreisst oder bricht.

Der Zähigkeitsverbesserer **D** kann ein fester oder ein flüssiger Zähigkeitsverbesserer, insbesondere ein flüssiger Zähigkeitsverbesserer, sein.

In einer ersten Ausführungsform ist der Zähigkeitsverbesserer D ein Acrylonitil/Butadien-Copolymer, welches mit Carboxylgruppen oder (Meth)acrylatgruppen oder Epoxidgruppen terminiert ist, oder ein Derivat davon ist.

Derartige Flüssigkautschuke sind beispielsweise unter dem unter dem Namen Hypro®, vormals Hycar®, CTBN und CTBNX und ETBN von Nanoresins AG, Deutschland kommerziell erhältlich. Als Derivate sind insbesondere Epoxidgruppen aufweisende Elastomer-modifizierte Polymere, wie sie unter der Produktelinie Polydis®, vorzugsweise aus der Produktelinie Polydis® 36, von der Firma Struktol® (Schill+Seilacher Gruppe, Deutschland) oder unter der Produktelinie Albipox (Nanoresins, Deutschland) kommerziell vertrieben werden, geeignet.

In einer zweiten Ausführungsform ist dieser Zähigkeitsverbesserer **D** ein Polyacrylatflüssigkautschuk, der mit flüssigen Epoxidharzen vollständig mischbar ist und sich erst beim Aushärten der Epoxidharzmatrix zu Mikrotröpfchen entmischt. Derartige Polyacrylatflüssigkautschuke sind beispielsweise unter der Bezeichnung 20208-XPA von Rohm und Haas erhältlich.

In einer dritten Ausführungsform ist dieser Zähigkeitsverbesserer D ein Polyetheramid, welches mit Carboxylgruppen oder Epoxidgruppen terminiert ist. Derartige Polyamide sind insbesondere hergestellt aus der Umsetzung von aminoterminierten Polyethylenether oder Polypropylenether, wie sie zum Beispiel unter dem Namen Jeffamine® von Huntsman vertrieben werden, mit Dicarbonsäureanhydrid nachfolgender Reaktion mit Epoxidharzen, wie sie zum im Beispiel 15 in Verbindung mit Beispiel 13 von DE 2123033 beschrieben sind. Anstelle von Dicarbonsäureanhydrid können auch Hydroxybenzoesäure oder Hydroxybenzoate verwendet werden.

In einer vierten, meist bevorzugten Ausführungsform, ist der Zähigkeitsverbesserer **D** ein endständig blockiertes Polyurethanprepolymer der Formel (I).

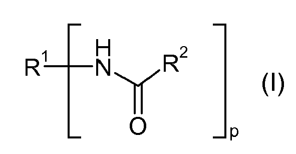

Hierbei steht R¹ für einen p-wertigen Rest eines mit Isocyanatgruppen terminierten linearen oder verzweigten Polyurethanprepolymers **PU1** nach dem Entfernen der endständigen Isocyanatgruppen und p für einen Wert von 2 bis 8.

Weiterhin stehen R² unabhängig voneinander für einen Substituenten, welcher ausgewählt ist aus der Gruppe bestehend aus

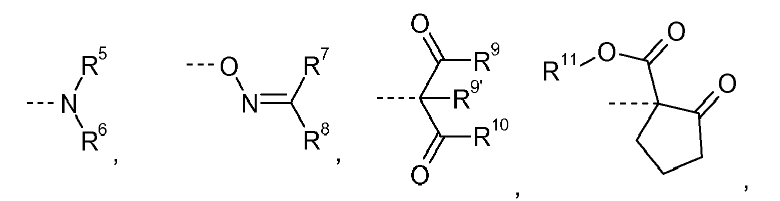

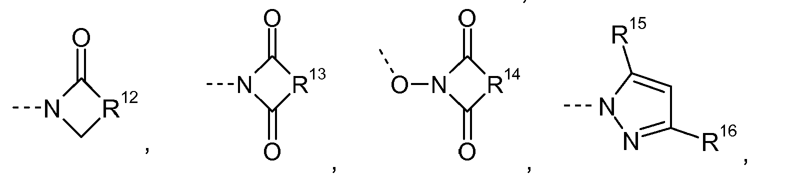

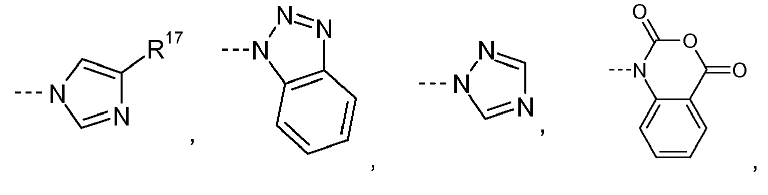

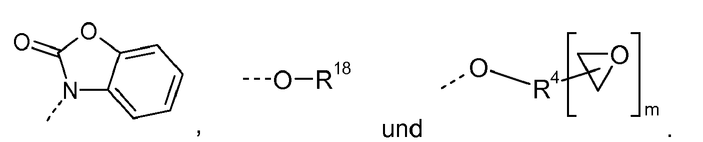

Hierbei steht R⁵, R⁶, R⁷ und R⁸ je unabhängig voneinander für eine Alkyl- oder Cycloalkyl- oder Aralkyl- oder Arylalkyl-Gruppe, oder R⁵ bildet zusammen mit R⁶, oder R⁷ zusammen mit R⁸, einen Teil eines 4- bis 7-gliedrigen Rings bilden, welcher allenfalls substituiert ist.

Weiterhin stehen R^{9'} und R¹⁰ je unabhängig voneinander für eine Alkyl-oder Aralkyl- oder Arylalkyl-Gruppe oder für eine Alkyloxy- oder Aryloxy- oder Aralkyloxy-Gruppe und R¹¹ für eine Alkylgruppe.

R¹², R¹³ und R¹⁴ stehen je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe.

R¹⁵, R¹⁶ und R¹⁷ stehen je unabhängig voneinander für H oder für eine Alkylgruppe oder für eine Arylgruppe oder eine Aralkylgruppe und R¹⁸ steht für eine Aralkylgruppe oder für eine ein- oder mehrkernige substituierte oder unsubstituierte Aromatengruppe, welche gegebenenfalls aromatische Hydroxylgruppen aufweist.

Schliesslich steht R⁴ für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen und m für einen Wert von 1, 2 oder 3.

Der Term "unabhängig voneinander" ist in diesem Dokument dahin gehend auszulegen, dass in demselben Molekül die gleich bezeichneten Substituenten, Resten oder Gruppen gleichzeitig mit unterschiedlicher Bedeutung auftreten können. Dies führt dazu, dass zum Beispiel in Formel (I) von den p Reste R² nicht alle denselben Rest darstellen müssen, sondern sie können, im Rahmen der Definition von R² mögliche, unterschiedliche Bedeutungen aufweisen. So ist es im Extremfall möglich, dass das endständig blockierte Polyurethanprepolymer der Formel (I) 8 voneinander verschiedene Reste R² aufweisen kann.

Die gestrichelten Linien in den Formeln dieses Dokumentes stellen jeweils die Bindung zwischen dem jeweiligen Substituenten und dem dazugehörigen Molekülrest dar.

Als R¹⁸ sind insbesondere einerseits Phenole oder Polyphenole, insbesondere Bisphenole, nach Entfernung einer Hydroxylgruppe zu betrachten. Bevorzugte Bespiele für derartige Phenole und Bisphenole sind insbesondere Phenol, Kresol, Resorcinol, Brenzkatechin, Cardanol (3-Pentadecenylphenol (aus Cashewnuss-Schalen-Öl)), Nonylphenol, mit Styrol oder Dicyclopentadien umgesetzte Phenole, Bis-Phenol-A, Bis-Phenol-F und 2,2'-Diallyl-bisphenol-A.

Als R¹⁸ sind andererseits insbesondere Hydroxybenzylalkohol und Benzylalkohol nach Entfernung einer Hydroxylgruppe zu betrachten.

Falls R⁵, R⁶, R⁷, R⁸, R⁹, R^{9'}, R¹⁰, R¹¹, R¹⁵, R¹⁶ oder R¹⁷ für eine Alkylgruppe steht, ist diese insbesondere eine lineare oder verzweigte C₁-C₂₀-Alkylgruppe.

Falls R⁵, R⁶, R⁷, R⁸, R⁹, R^{9'}, R¹⁰, R¹⁵, R¹⁶, R¹⁷ oder R¹⁸ für eine Aralkylgruppe steht, ist diese Gruppierung insbesondere eine über Methylen gebundene aromatische Gruppe, insbesondere eine Benzylgruppe.

Falls R⁵, R⁶, R⁷, R⁸, R⁹, R^{9'}oder R¹⁰ für eine Alkylarylgruppe steht, ist diese insbesondere eine über Phenylen gebundene C₁- bis C₂₀-Alkylgruppe, wie beispielsweise eine Tolyl- oder Xylyl-Gruppe.

Die Reste R² sind vorzugsweise die Substituenten der Formeln

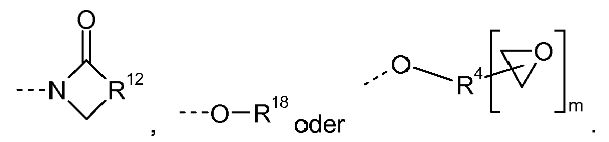

Als Substituent der Formel 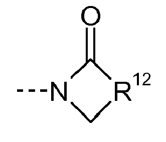 ist ε-Caprolactam nach Entfernung des NH-Protons bevorzugt.

Als Substituent der Formel ---O―R¹⁸ sind Monophenole oder Polyphenole, insbesondere Bisphenole, nach Entfernung eines phenolischen Wasserstoffatoms bevorzugt Besonders bevorzugte Bespiele für derartigen Reste R² sind Reste, welche ausgewählt sind aus der Gruppe bestehend aus

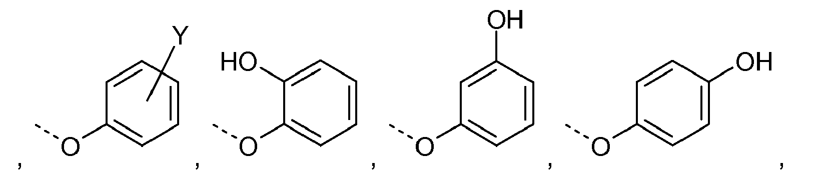

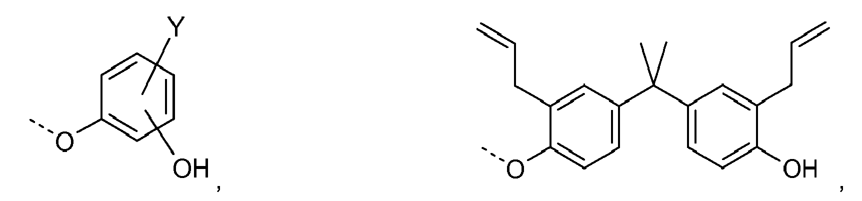

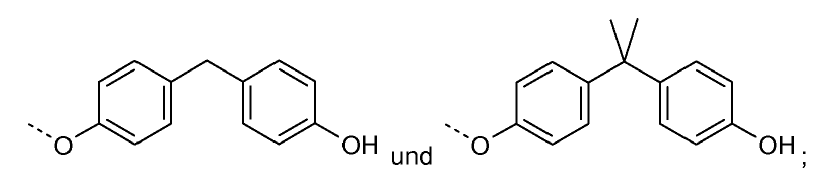

Der Rest Y steht hierbei für einen gesättigten oder olefinisch ungesättigten Kohlenwasserstoffrest mit 1 bis 20 C-Atomen, insbesondere mit 1 bis 15 C-Atomen. Als Y sind insbesondere Allyl, Methyl, Nonyl, Dodecyl oder ein ungesättigter C₁₅-Alkylrest mit 1 bis 3 Doppelbindungen bevorzugt.

Die Herstellung eines endständig blockierten Polyurethanprepolymers der Formel (I) ist beispielsweise offenbart in der Patentschrift EP 1935955 A1 in den Abschnitten [0040] bis [0077], deren Inhalt insbesondere hiermit durch Bezugnahme eingeschlossen wird.

Zur Herstellung eines endständig blockierten Polyurethanprepolymer der Formel (I) reagiert also ein mit Isocyanatgruppen terminiertes lineares oder verzweigtes Polyurethanprepolymer **PU1** mit einer Isocyanat-reaktiven Verbindungen R²H.

Meist bevorzugt steht R² für 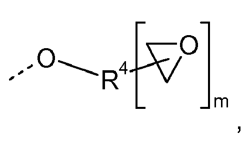 welche sich aus der Isocyanat-reaktiven Verbindungen R²H der Formel (V) ergibt.

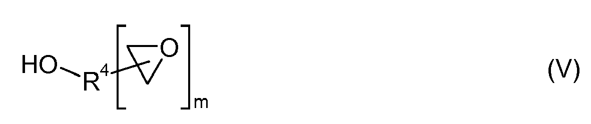

Falls mehrere derartige Monohydroxyl-Epoxidverbindungen eingesetzt werden, kann die Reaktion sequentiell erfolgen oder mit einer Mischung dieser Verbindungen erfolgen.

Die Monohydroxyl-Epoxidverbindung der Formel (V) weist 1, 2 oder 3 Epoxidgruppen auf. Die Hydroxylgruppe dieser Monohydroxyl-Epoxidverbindung (V) kann eine primäre oder eine sekundäre Hydroxylgruppe darstellen.

Solche Monohydroxyl-Epoxidverbindungen lassen sich beispielsweise durch Umsetzung von Polyolen mit Epichlorhydrin erzeugen. Je nach Reaktionsführung entstehen bei der Umsetzung von mehrfunktionellen Alkoholen mit Epichlorhydrin als Nebenprodukte auch die entsprechenden Monohydroxyl-Epoxidverbindungen in unterschiedlichen Konzentrationen. Diese lassen sich durch übliche Trennoperationen isolieren. In der Regel genügt es aber, das bei der Glycidylisierungsreaktion von Polyolen erhaltene Produktgemisch aus vollständig und partiell zum Glycidylether reagiertem Polyol einzusetzen. Beispiele solcher hydroxylhaltigen Epoxide sind Butandiolmonoglycidylether (enthalten in Butandioldiglycidylether), Hexandiolmonoglycidylether (enthalten in Hexandioldiglycidylether), Cyclohexandimethanolglycidylether, Trimethylolpropandiglycidylether (als Gemisch enthalten in Trimethylolpropantriglycidylether), Glycerindiglycidylether (als Gemisch enthalten in Glycerintriglycidylether), Pentaerythrittriglycidylether (als Gemisch enthalten in Pentaerythrittetraglycidylether). Vorzugsweise wird Trimethylolpropandiglycidylether, welcher zu einem relativ hohen Anteil in üblich hergestellten Trimethylolpropantriglycidylether vorkommt, verwendet.

Es können aber auch andere ähnliche hydroxylhaltige Epoxide, insbesondere Glycidol, 3-Glycidyloxybenzylalkohol oder Hydroxymethyl-cyclohexenoxid eingesetzt werden. Weiterhin bevorzugt ist der β-Hydroxyether der Formel (IX), der in handelsüblichen flüssigen Epoxidharzen, hergestellt aus Bisphenol-A (R = CH₃) und Epichlorhydrin, zu etwa 15 % enthalten ist, sowie die entsprechenden β-Hydroxyether der Formel (IX), die bei der Reaktion von Bisphenol-F (R = H) oder des Gemisches von Bisphenol-A und Bisphenol-F mit Epichlorhydrin gebildet werden.

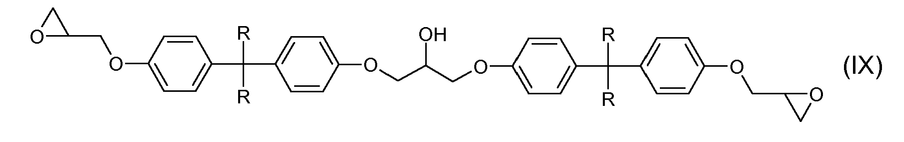

Weiterhin bevorzugt sind auch Destillationsrückstände, welche bei der Herstellung von hochreinen, destillierten Epoxid-Flüssigharzen anfallen. Solche Destillationsrückstände weisen eine bis zu drei Mal höhere Konzentration an hydroxylhaltigen Epoxiden auf als handelübliche undestillierte Epoxid-Flüssigharze. Im Weiteren können auch unterschiedlichste Epoxide mit einer β-Hydroxyether-Gruppe, hergestellt durch die Reaktion von (Poly-)Epoxiden mit einem Unterschuss von einwertigen Nukleophilen wie Carbonsäuren, Phenolen, Thiolen oder sec.- Aminen, eingesetzt werden.

Der Rest R⁴ ist insbesondere bevorzugt ein dreiwertiger Rest der Formel 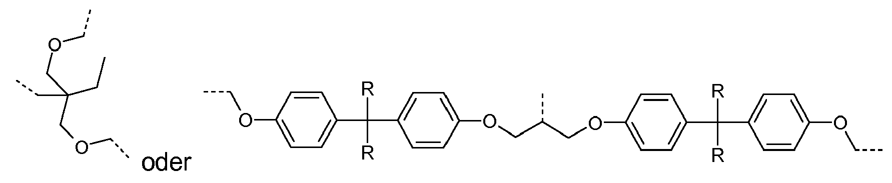 wobei R für Methyl oder H steht.

Die freie primäre oder sekundäre OH-Funktionalität der Monohydroxyl-Epoxidverbindung der Formel (V) lässt eine effiziente Umsetzung mit terminalen Isocyanatgruppen von Prepolymeren zu, ohne dafür unverhältnismässige Überschüsse der Epoxidkomponente einsetzen zu müssen.

Es ist dem Fachmann klar, dass natürlich auch Mischungen von Zähigkeitsverbesserern D verwendet werden können.

Die Menge der Zähigkeitsverbesserers **D**, insbesondere des endständig blockierten Polyurethanprepolymers der Formel (I), beträgt vorteilhaft zwischen 1 und 50 Gewichts-%, insbesondere zwischen 3 und 40 Gewichts-%, bezogen auf das Gesamtgewicht der hitzehärtenden Epoxidzusammensetzung.

Die hitzehärtende Epoxidzusammensetzung ist vorzugsweise hochviskos, das heisst, sie weist eine Viskosität von mehr als 900 Pas, insbesondere mehr 1000 Pas, bei 25°C auf. Bevorzugt weist die Viskosität bei 25 °C einen Wert zwischen 1000 Pas und 4000 Pas auf. Die Viskosität wird hierbei oszillographisch mittels eines Rheometers mit beheizbarer Platte (MCR 201, Firma Anton Paar) gemessen (Spalt 1000 µm, Mess-Plattendurchmesser: 25 mm (Platte/Platte), Deformation 0.01 bei 5 Hz, Temperatur: 25°C), bestimmt.

Vorzugsweise sind in der hitzehärtenden Epoxidzusammensetzung hitzehärtende einkomponentige Epoxidharzklebstoffe, wie sie in der Produktelinie SikaPower® von Sika Automotive GmbH kommerziell erhältlich sind, enthalten.

Ein weiterer Aspekt der Erfindung betrifft ein Verfahren zur Herstellung einer Bördelfalzverklebung. Dieses umfasst mindestens die Schritte
a) Applikation einer hitzehärtenden Epoxidzusammensetzung, wie sie vorgehend erwähnt wurde, auf ein Innenblech oder auf ein Aussenblech;
b) Kontaktieren der hitzehärtenden Epoxidzusammensetzung mit dem Aussenblech oder dem Innenblech;
c) Bördeln des Aussenbleches um das Innenblech, so dass im Innenraum des Bördelfalzes hitzehärtende Epoxidzusammensetzung vorhanden ist;
d) Verpressen des Bördelfalzes;
e) Einführen thermischer Energie in die hitzehärtende Epoxidzusammensetzung.

Die hitzehärtende Epoxidzusammensetzung wird in einem ersten Schritt (a) des erfindungsgemässen Verfahrens auf ein Innenblech oder ein Aussenblech aufgetragen. Dies erfolgt vorteilhaft bei einer Applikationstemperatur der hitzehärtenden Epoxidzusammensetzung von 23°C bis 80°C, insbesondere von 23°C und 60°C, bevorzugt von 50 bis 60°C.

Der Auftrag der hitzehärtenden Epoxidzusammensetzung, im Folgenden auch Klebstoff genannt, erfolgt typischerweise im Randbereich des Aussenbleches. Die Menge und genaue Applikationsstelle des Klebstoffes ist derart, dass nach dem weiter unten beschriebenen Verpressen der Bördelfalz möglichst vollständig mit Klebstoff gefüllt ist. Der Auftrag erfolgt vorzugsweise automatisch und vorzugsweise in Form einer Klebstoffraupe.

In einem zweiten Schritt (b) des erfindungsgemässen Verfahrens wird dann der Klebstoff mit dem Aussenblech oder dem Innenblech kontaktiert. Damit stehen nun Innenblech und Aussenblech mit dem Klebstoff in Kontakt.

Selbstverständlich ist es auch möglich, dass mehrere Innenbleche, welche miteinander unter Wiederholung der Schritte a) und b) miteinander verklebt werden, für die Herstellung eines Bördelfalzes verwendet werden können.

In einem dritten Schritt (c) des erfindungsgemässen Verfahrens wird das Aussenblech um das Innenblech gebördelt, so dass im Innenraum des so gebildeten Falzes Klebstoff vorhanden ist.

In einem vierten Schritt (d) des erfindungsgemässen Verfahrens wird nun der Bördelfalz verpresst. Vorzugsweise erfolgt das Verpressen des Bördelfalzes auf eine Klebstoffschichtdicke (dₓ), welcher der Dicke (d_{y}) des gegebenenfalls vorhandenen Abstandhalters entspricht.

Als Dicke des Abstandhalters, auch als "d_{y}" bezeichnet, gilt hierbei in diesem Dokument die Dicke des Abstandshalters senkrecht zur Aussenblechfläche. Geometrisch noch genauer wird die Dicke des Abstandhalters als räumliche Ausdehnung des Abstandhalters in zum Normalvektor der Tangentialfläche der Innenblechoberfläche am zum Abstandhalter nächstliegenden Punkt parallel stehender Richtung definiert.

Durch das Verpressen wird die Klebstoffschichtdicke, welche in diesem Dokument auch als "dₓ" bezeichnet wird, verkleinert und zwar so, dass sie der Dicke des Abstandhalters entspricht. Der Ausdruck "entspricht" ist in diesem Zusammenhang nicht als "absolut identisch" auszulegen. Er umfasst auch geringe Abweichungen von diesem Wert, die typischerweise maximal 10% betragen. Bei einer absoluten Identität, wäre nämlich zwischen dem Abstandhalter und Innenblech, bzw. Aussenblech, kein Klebstoffbindemittel, d.h. reaktive Klebstoffbestandteile, mehr vorhanden. Dies ist zwar grundsätzlich möglich, aber es ist vorteilhaft, wenn sich zwischen Abstandhalter und Innenblech und/oder Aussenblech eine dünne Schicht von Klebstoffbindemittel befindet.

Die Dicke des Abstandhalters wird insbesondere vor allem von der Dicke des zu erzielenden Bördelfalzes und damit insbesondere von der Dicke des Aussenbleches, in diesem Dokument auch ais "d_{z}" bezeichnet, beeinflusst. Vorzugsweise beträgt das Verhältnis der Dicke (d_{y}) des Abstandhalters zur Dicke (d_{z}) des Aussenbleches einen Wert von 0.05 ― 0.70. Bei einer typischen Dicke eines Aussenbleches für eine Bördelfalzverklebung von 0.5 bis 1.5 mm werden deshalb Abstandhalter der Dicke von insbesondere 0.08 bis 0.4 mm eingesetzt. Bevorzugt sind Abstandhalter der Dicke 0.1 bis 0.2 mm und Aussenbleche der Dicke 0.5 bis 1.2 mm. Die Dicke der Innenbleche wird vorzugsweise im ähnlichen Dickenbereich wie das Aussenblech ausgewählt.

Als Innenblech und Aussenblech sind grundsätzlich alle die vom Fachmann bekannten Bleche geeignet. Insbesondere sind dies diejenigen Blechmaterialien, welche für die Bördelfalzverklebung bereits im Transportmittelbau oder in der Herstellung von Weisswaren benutzt werden.

Bevorzugte Bleche sind aus Stahl, insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

Das Bördeln und Verpressen erfolgt mit dem Fachmann bekannten Werkzeugen.

In einem weiteren Schritt (e) des erfindungsgemässen Verfahrens wird thermischer Energie in den Klebstoff eingeführt. Das Zuführen der thermischen Energie bewirkt das Vernetzen des Klebstoffes in hitzehärtenden Klebstoffen, bzw. beschleunigt das Vernetzen des Klebstoffes, so dass möglichst schnell eine genügend hohe Festigkeit der Bördelfalzverklebung erzielt wird.

Somit schliesst vorzugsweise anschliessend an Schritt e) ein Schritt f) des Vernetzens des Klebstoffes an.

Die thermische Energie wird insbesondere über Erwärmung in einem Ofen, über Infrarotstrahlung oder über Induktionsheizung, bevorzugt über Induktionsheizung, in den Klebstoff eingebracht.

Es ist vorteilhaft, wenn durch die Einführung von thermische Energie der Klebstoff auf eine Temperatur von 100 ― 220 °C, vorzugsweise 120 - 200°C aufgeheizt wird.

Die endgültige Vernetzung kann auch im KTL-Ofen erfolgen.

Ein weiterer Aspekt der Erfindung betrifft eine Bördelfalzverklebung, welche nach dem vorgängig beschriebenen Verfahren hergestellt wird.

Weiterhin betrifft die Erfindung die Verwendung des vorgängig beschriebenen Verfahrens zur Herstellung von Bördelfalzverklebungen in der Herstellung von Transportmitteln, insbesondere von Automobilen, Bussen, Lastkraftwagen, Schienenfahrzeugen, Schiffen oder Luftfahrzeugen, oder Weisswaren, insbesondere Waschmaschinen, Tumbler oder Geschirrspülern.

Schliesslich wird in einem weiteren Aspekt der Erfindung ein Artikel, welcher eine beschriebene Bördelfalzverklebung aufweist, beansprucht

Derartige Artikel oder Bördelfalz-Klebverbundkörper sind insbesondere Transportmittel, insbesondere ein Automobil, Bus, Lastkraftwagen, Schienenfahrzeug, ein Schiff oder ein Luftfahrzeug ist, oder eine Weissware, insbesondere eine Waschmaschine, Tumbler oder Geschirrspüler.

### Kurze Beschreibung der Zeichnung

Im Folgenden werden anhand der Zeichnungen ausgewählte Ausführungsbeispiele der Erfindung näher erläutert. Gleiche Elemente sind in den verschiedenen Figuren mit den gleichen Bezugszeichen versehen. Die Richtung von Kräften beziehungsweise Bewegungen ist mit Pfeilen angegeben.

Es zeigen:
- Fig. 1a-e: eine schematische Querschnitt-Darstellung der Herstellung einer Bördelfalzverklebung aus dem Stand der Technik umfassend unterschiedliche Stufen
Fig. 1a Applikation eines Klebstoffes auf das Aussenblech
Fig. 1b Applikation eines Klebstoffes mit Abstandhaltern auf das Aussenblech
Fig. 1c Kontaktieren des Klebstoffs mit Abstandhaltern mit dem Innenblech
Fig. 1d Bördeln des Aussenblechs und Verpressen des Bördelfalzes
Fig. 1e Einführen thermischer Energie und Vernetzen des Klebstoffes
- Fig. 2a: Querschnitt durch einen erfindungsgemässen Klebstoff
- Fig. 2b: Einführen thermischer Energie und Vernetzen eines erfindungsgemässen Klebstoffes
- Fig. 2c: Einführen thermischer Energie und Vernetzen eines erfindungsgemässen Klebstoffes
- Fig. 3a: Querschnitt durch einen erfindungsgemässen Klebstoff
- Fig. 3b: Erfindungsgemässer Klebstoff vor dem Verpressen
- Fig.3c: Einführen thermischer Energie und Vernetzen eines erfindungsgemässen Klebstoffes

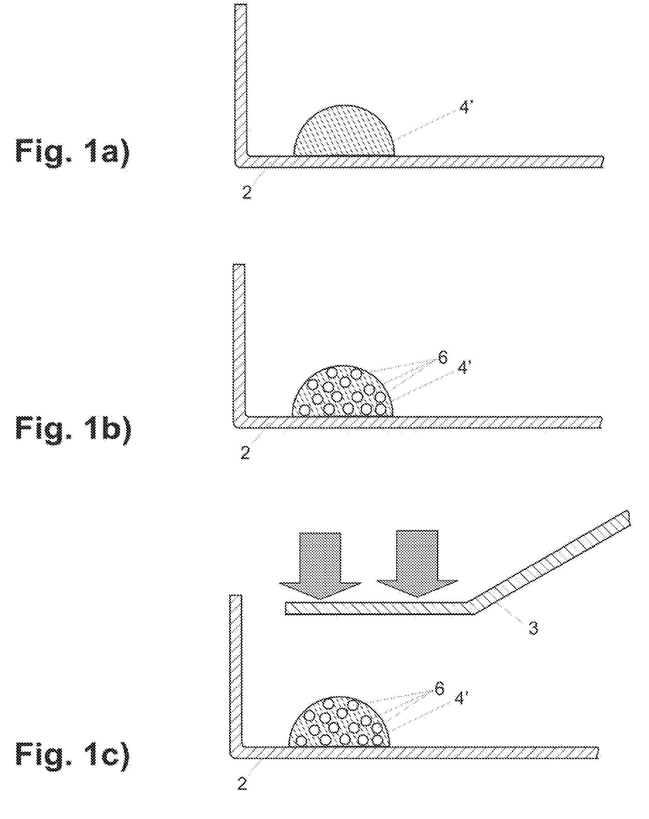

Figuren 1a bis 1e zeigen schematisch dargestellt unterschiedliche Zwischenstufen in einem möglichen Verfahren zur Herstellung einer Bördelfalzverklebung. Der nicht-erfindungsgemässe Klebstoff 4' (ohne metallische Partikel) kann ohne Abstandhalter 6, wie in Figur 1a gezeigt, oder mit Abstandhaltern, wie in den Figuren 1b bis 1e dargestellt, verwendet werden. Der Auftrag des nicht-erfindungsgemässen Klebstoffs 4' erfolgt in dieser Darstellung in Form einer Rundraupe in dem Bereich des Randbereichs des Aussenblechs 2, wo der Kontakt mit dem Innenblech 3 erfolgen soll. Das Aussenblech 2 weist in dieser Darstellung bereits eine Umformung des Randbereiches auf. Eine derartige Umformung kann vor dem Auftrag des Klebstoffs bereits bestehen oder im Rahmen der Bördelung erfolgen. Die Abstandhalter 5 sind in den Figuren 1b bis 1e Kugeln.
Figur 1c schematisch zeigt wie der nicht-erfindungsgemässe Klebstoff 4' mit dem Innenblech 3 kontaktiert wird. In dieser Darstellung wird das Innenblech 3 von oben auf das mit nicht-erfindungsgemässen Klebstoff 4' belegte Aussenblech 2 hin bewegt und es erfolgt unter leichtem Andrücken ein Kontakt zwischen Innenblech 3 und nicht-erfindungsgemässem Klebstoff 4'.

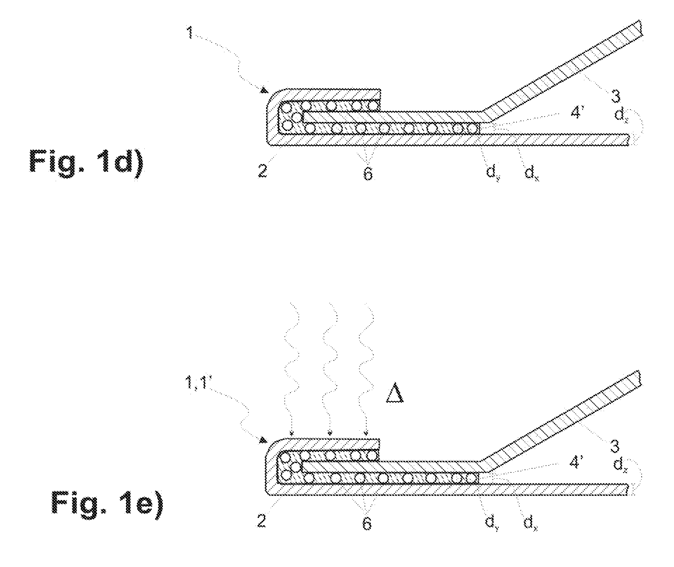

Figur 1d zeigt das Resultat des Bördeln des Aussenbleches 2 um das Innenblech 3 mit anschliessendem Verpressen des Bördelfalzes 1 auf eine Klebstoffschichtdicke dₓ, welcher der Dicke d_{y} des Abstandhalters 6 entspricht. Figur 1d zeigt die Zwischenstufe nach diesen zwei Verfahrensschritten auf.
Figur 1e zeigt den Schritt des Einführens von thermischer Energie (Δ) in den nicht-erfindungsgemässen Klebstoff 4'. Hierdurch erfolgt das Vernetzens des Klebstoffs. Die thermische Energie kann beispielsweise durch einen IR-Strahler, Ofen oder Heissluftföhn erfolgen. Das erwärmte Aussenblech 2 transferiert die Wärme auf den nicht-erfindungsgemässen Klebstoff 4', welcher dann unter Hitzeeinwirkung vernetzt. Optimalerweise wäre eine allseitige Wärmeeinwirkung um den Bördelfalz um eine schnelle gleichmässige Durchhärtung des Klebstoffs 4' zu erreichen.

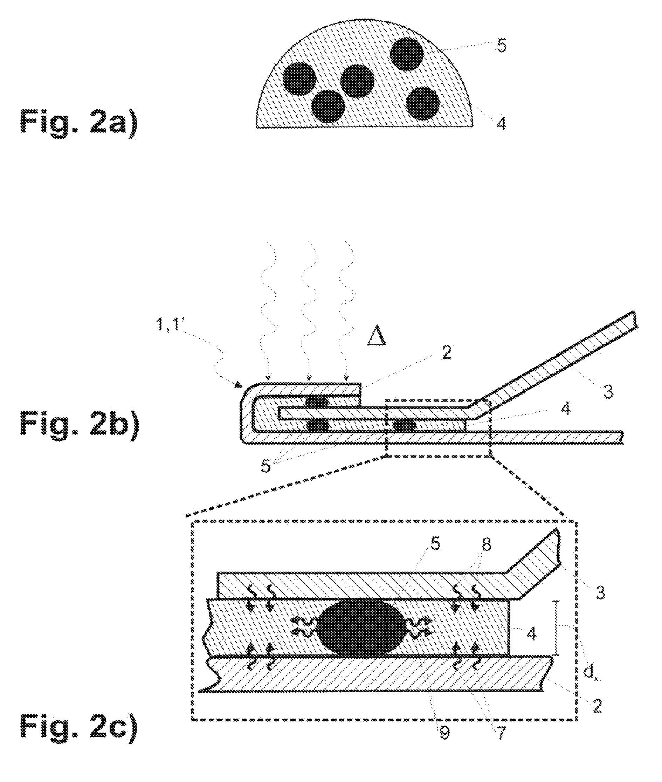

Figur 2a zeigt einen Querschnitt durch einen erfindungsgemässen Klebstoff 4, wobei es sich um eine hitzehärtende Epoxidzusammensetzung, wie sie vorgehend in dem Abschnitt "Wege zur Ausführung der Erfindung" beschrieben wurde, handelt. Der Ausdruck "erfindungsgemässer Klebstoff" soll also im Sinne einer erfindungsgemässen Verwendung verstanden werden. Figur 2b zeigt das Einführen thermischer Energie und Vernetzen eines erfindungsgemässen Klebstoffes, wobei es sich bei Figur 2c um eine Vergrösserung des gestrichelten Bereichs in Figur 2b handelt, welche speziell den Wärmeeintrag in den Klebstoff 4 zeigt.

In Figur 2c ist ersichtlich, dass der Wärmeeintrag über das Aussenblech 2, respektive das Innenblech 3, bei Verwendung eines erfindungsgemässen Klebstoffs nicht nur anhand der Wärmeabgabe 7 des Aussenblechs 2, respektive der Wärmeabgabe 8 des Innenblechs 3, erfolgt, sondern zusätzlich über die Wärmeabgabe 9 der metallischen Partikel 5.

Da die Klebstoffschichtdicke dₓ geringer ist als der Durchmesser der metallischen Partikel 5 vor dem Verpressen führt der Verpressungsvorgang zu einem beidseitigen Kontakt der metallischen Partikel mit dem Aussenblech, respektive dem Innenblech, unter Verformung des metallischen Partikels 5. Aufgrund der höheren Wärmeleitfähigkeit der metallischen Partikel gegenüber dem entsprechenden Klebstoff ohne metallische Partikel erfolgt ein schnellerer Wärmeenergieeintrag gegenüber einem nicht-erfindungsgemässen Klebstoff, der keine metallischen Partikel aufweist oder nur metallische Partikel, deren Durchmesser geringer ist als die Klebstoffschichtdicke dₓ.

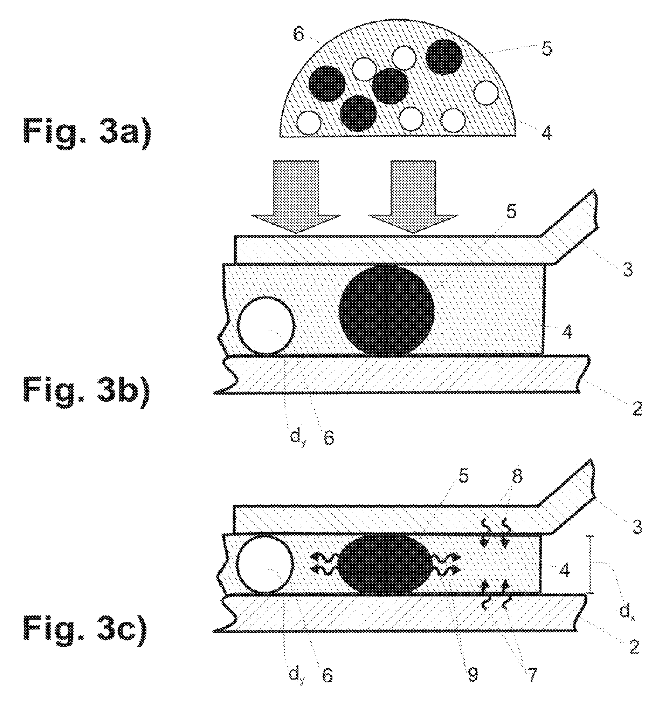

Die Figuren 3a, 3b und 3c zeigen denselben Sachverhalt wie die Figuren 2a bis 2c, wobei die Klebstoffzusammensetzung zusätzlich Abstandhalter mit der Dicke d_{y} aufweist. Dies ist dahingehend von Vorteil, dass sich dadurch die Klebstoffschichtdicke dₓ über die Dicke des Abstandhalter 6 d_{y} einstellen lässt, wodurch sich der zusätzliche Wärmeeintrag der metallischen Partikel über eine kontrollierte Klebstoffschichtdicke dₓ besser steuern lässt.

### Bezugszeichenliste

- 1: Bördelfalz
- 1': Bördelfalz-Klebverbundkörper
- 2: Aussenblech
- 3: Innenblech
- 4: Erfindungsgemässer Klebstoff
- 4': Nicht-erfindungsgemässer Klebstoff
- 5: Metallische Partikel
- 6: Abstandhalter
- 7: Wärmeabgabe Aussenblech 2
- 8: Wärmeabgabe Innenblech 3
- 9: Wärmeabgabe metallische Partikel 5
- dₓ: Klebstofifschichtdicke
- d_{y}: Dicke des Abstandhalters 5
- d_{z}: Dicke des Aussenblechs 2

- Δ: hermische Energie

### Beispiele

SikaPower®-492 ist ein bei Sika Automotive GmbH kommerziell erhältlicher hitzehärtender Epoxidharzklebstoff enthaltend einen Zähigkeitsverbesserer der Formel (I). Dieser weist bei 25°C eine Viskosität von ca. 2700 Pas und bei 50°C von ca. 1000 Pas auf. Dem Klebstoff wurden weiter Glaskugeln (Sigmund Lindner GmbH, Deutschland) des Durchmessers 0.1 ― 0.11 mm, 0.25 ― 0.3 mm, oder 1.2 mm unter Rühren zugegeben. Die zugegebene Menge an Glaskugeln betrug 2 Vol-%, bezogen auf die Endzusammensetzung. Dieser Vergleichsklebstoff wurde als ***VK1*** bezeichnet.

Es wurde weiter ein erfindungsgemässer Klebstoff ***K1*** hergestellt, indem zu SikaPower®-492 Aluminiumpartikel (Ecka Aluminium AS 91) mit einem Durchmesser kleiner als 0.315 mm sowie Glaskugeln (Sigmund Lindner GmbH, Deutschland) des Durchmessers 0.1 ―0.11 mm, 0.25 ―0.3 mm, oder 1.2 mm unter Rühren zugegeben wurde. Die zugegebene Menge an Glaskugeln betrug 2 Vol-%, die zugegebene Menge an Aluminiumpartikeln betrug 9 Gew-%, bezogen auf die Endzusammensetzung.

Als Substrat wurde einerseits elektrolytisch verzinktes Stahlblech (DC-04) mit einer Dicke von 0.8 mm (im Folgenden auch kurz als Blech bezeichnet) verwendet, welches vorgängig mittels Heptan gereinigt wurde.

Als Substrat wurde andererseits ein Kunststoffprüfkörper (Rocholl GmbH, Deutschland) aus Glasfaserverstärktem Kunststoff mit einer Dicke von 2.4 mm (im Folgenden auch kurz als GFK bezeichnet) verwendet, welcher ohne vorgängige Reinigung verwendet wurde.

Der jeweilige Klebstoff wurde bei 50°C auf einer Klebefläche von 25 x 10 mm auf ein elektrolytisch verzinktes Stahlblech, resp. einen Glasfaserverstärkten Kunststoffprüfkörper aufgetragen und ein weiteres Blech (Dicke 0.8 mm), resp. GFK (Dicke 2.4 mm) aufgelegt und verpresst.

Diese Proben wurden anschliessend einer Induktionshärtung bei 17.5 kHz unterzogen, wobei innerhalb von 30 Sekunden auf eine Temperatur von 170°C geheizt wurde und anschliessend die Temperatur für weitere 30 Sekunden konstant gehalten wurde.

Die Zugscherfestigkeit (ZSF) der Probekörper wurde nach DIN EN 1465 bestimmt. Die Zuggeschwindigkeit betrug 10 mm/min.

**Tabelle 1. Prüfergebnisse der Zusammensetzungen. n.m.= nicht messbar, da nicht angedickt.**

| Substrat: | Blech | | | GFK |
|---|---|---|---|---|
| Glaskugel Durchmesser | 0.1 mm | 0.3 mm | 1.2 mm | 0.3 mm |
| Klebstoff | Zugscherfestigkeit (ZSF) [MPa] | | | |
| ***VK1*** | 7.5+/-0.8 | 8.5 +/- 0.5 | 4.2 +/- 0.4 | n.m. |
| ***K1*** | 10.4 +/- 0.7 | 8.6 +/- 0.7 | 4.3 +/- 0.1 | n.m. |

Der erfindungsgemässe Klebstoff ***K1*** enthält, in der Zusammensetzung mit Glaskugeln von 0.1 mm Durchmesser, metallische Partikel, welche einen grösseren Teilchendurchmesser, in diesem Fall einen bis zu 300 % grösseren Teilchendurchmesser, aufweisen, als die als Abstandhalter eingesetzten Glaskugeln. Die metallischen Partikel aus Aluminium stehen daher aufgrund der Verpressung beidseitig mit einem bedeutendem Anteil der Oberfläche in Kontakt mit dem Blech und führen dadurch zum einem zusätzlichen Wärmeeintrag in den Klebstoff.

Aus den Resultaten der Tabelle 1 ist ersichtlich, dass der erfindungsgemässe Klebstoff ***K1,*** im Falle von Glaskugeln mit 0.1 mm Durchmesser, gegenüber dem Vergleichsklebstoff ***VK1*** eine signifikant höhere Zugscherfestigkeit aufweist. Die höhere Zugscherfestigkeit gegenüber dem Vergleichsklebstoff ***VK1*** ist bedingt durch die bessere Aushärtung des Klebstoffs aufgrund des zusätzlichen Wärmeeintrags durch die beidseitig in Kontakt mit dem Blech stehenden metallischen Partikel.

Aufgrund der Tatsache, dass sich GFK nicht durch die gewählten Induktionsparameter erwärmen lässt, konnte eine Zugscherfestigkeitsmessung wegen der fehlenden Aushärtung der Klebstoffe nicht bestimmt werden.

## Patentansprüche

1. Verwendung einer hitzehärtenden Epoxidzusammensetzung enthaltend
- mindestens ein Epoxidharz **A** mit durchschnittlich mehr als einer Epoxidgruppe pro Molekül;
- mindesten einen Härter **B** für Epoxidharze, welcher durch erhöhte Temperatur aktiviert wird; sowie
- metallische Partikel mit einer durchschnittlichen Teilchengrösse von 50 - 3000 µm
als Klebstoff in Bördelfalzverklebungen.

2. Verwendung gemäss Anspruch 1, **dadurch gekennzeichnet, dass** die hitzehärtende Epoxidzusammensetzung zusätzlich mindestens einen Zähigkeitsverbesserer **D**, insbesondere ein endständig blockiertes Polyurethanprepolymer der Formel (I), umfasst; 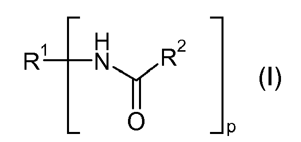 wobei R¹ für einen p-wertigen Rest eines mit Isocyanatgruppen terminierten linearen oder verzweigten Polyurethanprepolymers **PU1** nach dem Entfernen der endständigen Isocyanatgruppen steht;
p für einen Wert von 2 bis 8 steht; und
R² unabhängig voneinander für einen Substituenten steht, welcher ausgewählt ist aus der Gruppe bestehend aus 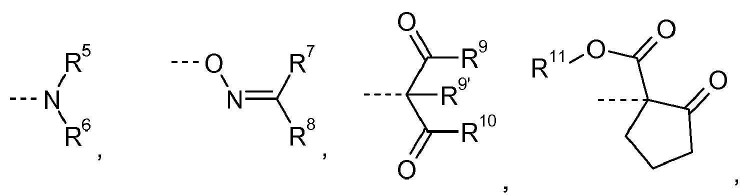 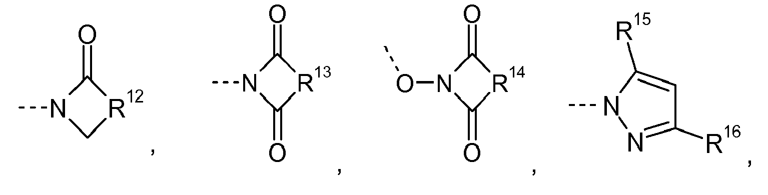 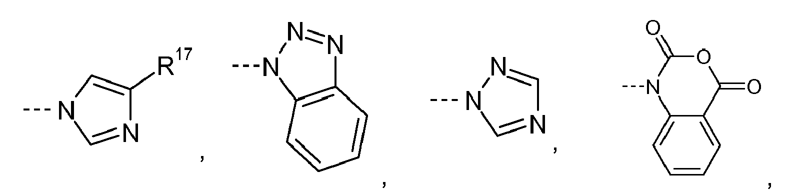 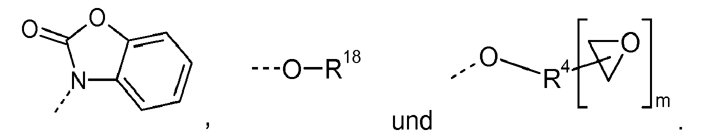 wobei
R⁵, R⁶, R⁷ und R⁸ je unabhängig voneinander für eine Alkyl- oder Cycloalkyl- oder Aralkyl- oder Arylalkyl-Gruppe steht oder R⁵ zusammen mit R⁶, oder R⁷ zusammen mit R⁸, einen Teil eines 4- bis 7-gliedrigen Rings bilden, welcher allenfalls substituiert ist;
R⁹, R^{9'} und R¹⁰ je unabhängig voneinander für eine Alkyl- oder Aralkyl-oder Arylalkyl-Gruppe oder für eine Alkyloxy- oder Aryloxy- oder Aralkyloxy-Gruppe steht;
R¹¹ für eine Alkylgruppe steht,
R¹², R¹³ und R¹⁴ je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe stehen;
R¹⁵, R¹⁶ und R¹⁷ je unabhängig voneinander für H oder für eine Alkylgruppe oder für eine Arylgruppe oder eine Aralkylgruppe stehen; und R¹⁸ für eine Aralkylgruppe oder für eine ein- oder mehrkernige substituierte oder unsubstituierte Aromatengruppe steht, welche gegebenenfalls aromatische Hydroxylgruppen aufweist;
R⁴ für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen steht;
und m für einen Wert von 1, 2 oder 3 steht.

3. Verwendung gemäss einem der vorhergehenden Ansprüche, **dadurch gekennzeichnet, dass** die metallischen Partikel eine durchschnittliche Teilchengrösse von 100 bis 1000 µm, bevorzugt von 200 bis 400 µm, aufweisen.

4. Verwendung gemäss einem der vorhergehenden Ansprüche, **dadurch gekennzeichnet, dass** die Zusammensetzung der metallischen Partikel eine Härte gemessen nach Härteprüfverfahren Vickers DIN ISO 6507:2005 von kleiner als 120 HV 1, vorzugsweise kleiner als 50 HV 1, insbesondere bevorzugt kleiner als 30 HV 1 aufweist.

5. Verwendung gemäss einem der vorhergehenden Ansprüche, **dadurch gekennzeichnet, dass** die Zusammensetzung der metallischen Partikel eine Wärmeleitfähigkeit von grösser als 10 W/(m.K), vorzugsweise grösser als 50 W/(m.K), insbesondere bevorzugt grösser als 100 W/(m.K) aufweist.

6. Verwendung gemäss einem der vorhergehenden Ansprüche, **dadurch gekennzeichnet, dass** die Zusammensetzung der metallischen Partikel ein Metall enthält, welches ausgewählt ist aus der Liste bestehend aus Aluminium, Kupfer, Zinn, Zink, Chrom, Eisen, Nickel und Blei.

7. Verwendung gemäss einem der vorhergehenden Ansprüche, **dadurch gekennzeichnet, dass** der Gewichtsanteil an metallischen Partikeln 1 ― 50 Gew.-%, insbesondere 2 ― 30 Gew.-%, bevorzugt 2 ― 20 Gew.-%, bezogen auf das Gewicht der hitzehärtenden Epoxidzusammensetzung, beträgt.

8. Verwendung gemäss einem der vorhergehenden Ansprüche, **dadurch gekennzeichnet, dass** die hitzehärtende Epoxidzusammensetzung weiter Abstandhalter aufweist.

9. Verwendung gemäss Anspruch 8, **dadurch gekennzeichnet, dass** die Zusammensetzung der Abstandhalter eine Härte gemessen nach Härteprüfverfahren Vickers DIN ISO 6507:2005 von grösser als 200 HV 1 aufweisen.

10. Verwendung gemäss Anspruch 8 oder 9, **dadurch gekennzeichnet, dass** die metallischen Partikel eine durchschnittliche Teilchengrösse aufweisen, welche 110 - 500 %, vorzugsweise 150 - 400 %, der durchschnittlichen Teilchengrösse der Abstandhalter beträgt.

11. Verfahren zur Herstellung einer Bördelfalzverklebung umfassend mindestens die Schritte
a) Applikation einer hitzehärtenden Epoxidzusammensetzung, wie sie in einem der Ansprüche 1 bis 10 beschrieben ist, auf ein Innenblech (3) oder auf ein Aussenblech (2);
b) Kontaktieren der hitzehärtenden Epoxidzusammensetzung (4) mit dem Aussenblech (2) oder dem Innenblech (3);
c) Bördeln des Aussenbleches (2) um das Innenblech (3), so dass im Innenraum (11) des Bördelfalzes (1) hitzehärtende Epoxidzusammensetzung (4) vorhanden ist;
d) Verpressen des Bördelfalzes (1);
e) Einführen thermischer Energie in die hitzehärtende Epoxidzusammensetzung (4).

12. Verfahren gemäss Anspruch 11, **dadurch gekennzeichnet, dass** das Einführens thermischer Energie in die hitzehärtende Epoxidzusammensetzung (10) durch Induktionsheizung erfolgt.

13. Bördelfalzverklebung hergestellt nach einem Verfahren gemäss Anspruch 11 oder 12.

14. Verwendung eines Verfahrens zur Herstellung von Bördelfalzverklebungen gemäss einem der Ansprüche 11 oder 12 in der Herstellung von Transportmitteln, insbesondere von Automobilen, Bussen, Lastkraftwagen, Schienenfahrzeugen, Schiffen oder Luftfahrzeugen, oder Weisswaren, insbesondere Waschmaschinen, Tumbler oder Geschirrspülern.
